(19) Europäisches Patentamt
European Patent Office
Office européen des brevets

(11) **EP 2 466 270 A2**

(12) **EUROPEAN PATENT APPLICATION**

(43) Date of publication:
**20.06.2012 Bulletin 2012/25**

(51) Int Cl.:
***G01D 5/245*** (2006.01)

(21) Application number: **11193965.8**

(22) Date of filing: **16.12.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **17.12.2010 JP 2010281697**<br><br>(71) Applicant: **JTEKT Corporation**<br>**Osaka-shi, Osaka 542-8502 (JP)** | (72) Inventors:<br>• **Ueda, Takeshi**<br>**Osaka-shi, Osaka 542-8502 (JP)**<br>• **Komatsu, Hayato**<br>**Osaka-shi, Osaka 542-8502 (JP)**<br><br>(74) Representative: **Winter, Brandl, Fürniss, Hübner, Röss, Kaiser, Polte - Partnerschaft**<br>**Bavariaring 10**<br>**80336 München (DE)** |

(54) **Rotation Angle Detection Device**

(57)     A rotation angle calculation unit calculates a zero-crossing time point when a zero-crossing is detected for an output signal V1 or an output signal V2. The rotation angle calculation unit calculates a time interval (zero-crossing interval) between the zero-crossing time point calculated this time for the output signal V 1 or V2 for which the zero-crossing is detected and the zero-crossing time point calculated the last time for this output signal. The rotation angle calculation unit identifies the magnetic pole presently sensed by a magnetic sensor corresponding to the output signal for which the zero-crossing is detected, based on the calculated zero-crossing interval, the sum of zero-crossing intervals that is calculated last based on the output signals of the magnetic sensor over one turn of a rotor, the rotation direction of the rotor, and the content of an amplitude correction table (a first or second table) for the magnetic sensor.

FIG.1

EP 2 466 270 A2

**Description**

BACKGROUND OF THE INVENTION

1. Field of the Invention

The invention relates to a rotation angle detection device that detects the rotation angle of a rotor, for example, a rotor of a brushless motor.

2. Description of Related Art

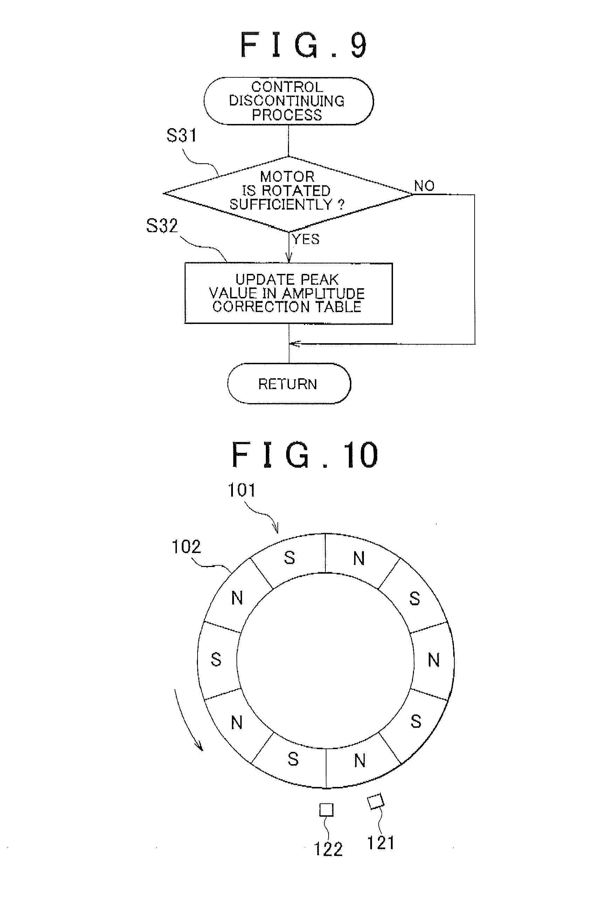

In order to control a brushless motor used in, for example, an electric power steering system, electric currents need to be applied to stator coils according to the rotation angle of a rotor. Therefore, there is a conventional rotation angle detection device that detects the rotation angle of a rotor of a brushless motor using a detection rotor that rotates as the brushless motor runs. Specifically, as shown in FIG. 10, a detection rotor 101 (will hereinafter be referred to as "rotor 101") has a cylindrical magnet 102 with a plurality of magnetic pole pairs. The number of magnetic pole pairs of the cylindrical magnet 102 corresponds to the number of magnetic pole pairs of the rotor of the brushless motor. Two magnetic sensors 121 and 122 are provided around the rotor 101 such that a given angular interval, about the rotation axis of the rotor 101, is created between the magnetic sensors 121 and 122. The magnetic sensors 121 and 122 output respective sinusoidal signals that are different in phase from each other by a given degree. The rotation angle detection device detects the rotation angle of the rotor 101 (the rotation angle of the rotor of the brushless motor) based on the two sinusoidal signals. With regard to such a rotation angle detection device, refer to, for example, Japanese Patent Application Publication No. 2002-257649.

In this example, the magnet 102 has five magnetic pole pairs. That is, the magnet 102 has ten magnetic poles that are equiangularly arranged. The magnetic poles are arranged such that the angular intervals, about the rotation axis of the rotor 101, between the consecutive magnetic poles are each 36 degrees (180 degrees in electric angle). Further, the two magnetic sensors 121 and 122 are arranged such that the angular interval, about the rotation axis of the rotor 101, between the magnetic sensors 121 and 122 is 18 degrees (90 degrees in electric angle).

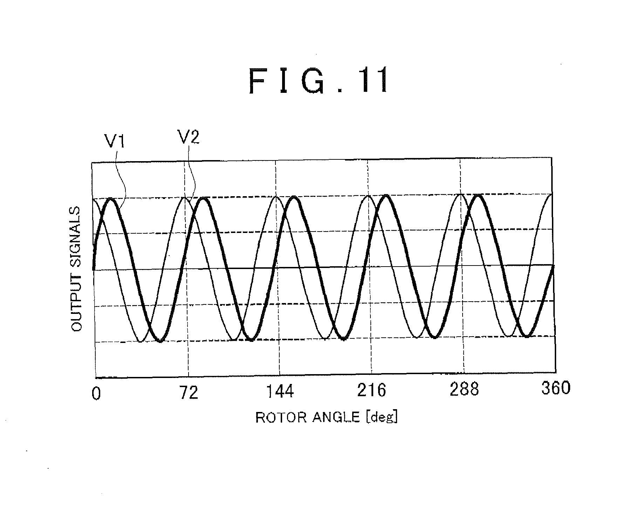

The direction indicated by the arrow in FIG. 10 is the normal rotation direction of the detection rotor 101. The rotation angle of the rotor 101 increases as the rotor 101 rotates in the normal direction, and decreases as the rotor 101 rotates in the reverse direction. As shown in FIG. 11, the magnetic sensors 121 and 122 output, respectively, a sinusoidal signal V1 and a sinusoidal signal V2. One cycle of each of the sinusoidal signals V1 and V2 corresponds to the period required for the rotor 101 to rotate by an angle corresponding to a single magnetic pole pair (72 degrees (360 degrees in electric angle)).

In this example, the absolute rotation angle of the rotor 101 with respect to a predetermined reference position is referred to as "absolute rotation angle (mechanical angle) $\theta_A$ of the rotor 101". The rotation angle of the rotor 101 obtained in the following manner is referred to as "relative rotation angle $\theta_R$ of the rotor 101". The angular range of one turn of the rotor 101 is divided into five divisional sections corresponding to the five magnetic pole pairs, and the starting position and ending position of each divisional section are defined as 0 degrees and 360 degrees, respectively. The rotation angle of the rotor 101 is expressed using the starting position and ending position of each divisional section as 0 degrees and 360 degrees, respectively. In this example, because the angular widths of the ten magnetic poles are all equal to each other, the relative rotation angle $\theta_R$ of the rotor 101 coincides with the electric angle of the rotor of the brushless motor.

In this example, the first magnetic sensor 121 outputs an output signal V1 that is expressed as $V1 = A1 \bullet \sin\theta_R$, and the second magnetic sensor 122 outputs an output signal V2 that is expressed as $V2 = A2 \bullet \cos\theta_R$. Note that A1 and A2 each represent an amplitude. If the amplitude A1 of the output signal V1 and the amplitude A2 of the output signal V2 are equal to each other, the relative rotation angle $\theta_R$ of the rotor 101 is determined by using the output signals V1 and V2, according to Expression 1 shown below.

$$\theta_R = \tan^{-1}(\sin\theta_R / \cos\theta_R)$$

$$= \tan^{-1}(V1 / V2) \qquad \text{Expression 1}$$

The brushless motor is controlled using the relative rotation angle $\theta_R$ calculated as described above. Meanwhile, the absolute rotation angle $\theta_A$ of the rotor 101 may be determined by using the relative rotation angle $\theta_R$, according to Expression 2 shown below.

$$\theta_A = \{\theta_R + 360 \times (n-1)\} / 5 \qquad (\text{where } n = 1, 2, \dots 5) \qquad \text{Expression 2}$$

With the conventional rotation angle detection device described above, due to variation among the magnetic forces of the magnetic poles, etc., the amplitude of the output signal V1 of the first magnetic sensor 121 and the amplitude of the output signal V2 of the second magnetic sensor 122 vary from magnetic pole to magnetic pole. Therefore, an error occurs in the detection of rotation angle of the rotor 101. One possible option for addressing this issue is to calculate the relative rotation angle $\theta_R$ of the rotor 101 after correcting (performing an amplitude correction on) the output signal V1 of the first magnetic sensor 121 and the output signal V2 of the second magnetic sensor 122 according to the absolute rotation angle (mechanical angle) $\theta_A$ of the rotor 101 such that the amplitude of the output signal V1 of the first magnetic sensor 121 and the amplitude of the output signal V2 of the second magnetic sensor 122 become equal to each other.

If the magnetic force varies from magnetic pole to magnetic pole, it is necessary to change the gains that are used to correct the output signal V1 of the first magnetic sensor 121 and the output signal V2 of the second magnetic sensor 122 in each cycle or each half cycle in the relative rotation angle (electric angle). Such gain correction, however, requires identifying the magnetic poles presently sensed by the magnetic sensors 121 and 122.

SUMMARY OF THE INVENTION

It is an object of the invention to provide a rotation angle detection device that is capable of identifying the magnetic pole presently sensed by a magnetic sensor.

An aspect of the invention relates to a rotation angle detection device that includes: a detection rotor that rotates as a rotor rotates and that has multiple magnetic poles arranged in a circumferential direction of the detection rotor; and multiple magnetic sensors that output respective sinusoidal signals that are different in phase from each other by a given degree as the detection rotor rotates, the rotation angle detection device detecting a rotation angle of the rotor based on the sinusoidal signals output from the magnetic sensors. The rotation angle detection device includes: a storing unit that stores angular widths of the respective magnetic poles; a zero-crossing detecting unit that detects a zero-crossing time point for each of the sinusoidal signals; a zero-crossing interval calculating unit that calculates, for each of the sinusoidal signals, a time interval between consecutive zero-crossings, based on the zero-crossing time point detected by the zero-crossing detecting unit; and a magnetic pole identifying unit that identifies the magnetic poles presently sensed by the respective magnetic sensors, based on the time interval calculated by the zero-crossing interval calculating unit and the angular widths of the respective magnetic poles.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a view schematically showing the configuration of a rotation angle detection device according to an example embodiment of the invention, which is adapted to detect the rotation angle of a rotor of a brushless motor;
FIG. 2 is a view schematically showing the structure of a detection rotor;
FIG. 3 is a chart schematically showing the waveforms of the output signals of a first magnetic sensor and a second magnetic sensor;
FIG. 4A is an example of an amplitude correction table for the first magnetic sensor;
FIG. 4B is an example of an amplitude correction table for the second magnetic sensor;
FIG. 5 is a flowchart illustrating the procedure of a rotation angle calculation routine executed by a rotation angle calculation unit;
FIGs. 6A and 6B are charts schematically illustrating a relative pole number setting process;
FIG. 7 is a chart schematically illustrating a zero-crossing time point calculation method;
FIG. 8 is a chart schematically illustrating a pole number identifying process based on zero-crossing detection in step S 14 in FIG. 5;
FIG. 9 is a flowchart illustrating an example of a control discontinuing process;
FIG. 10 is a view schematically illustrating a rotation angle detection method implemented by a conventional rotation angle detection device; and
FIG. 11 is a chart schematically showing the waveforms of the output signals of a first magnetic sensor and a second magnetic sensor included in the conventional rotation angle detection device.

DETAILED DESCRIPTION OF EMBODIMENTS

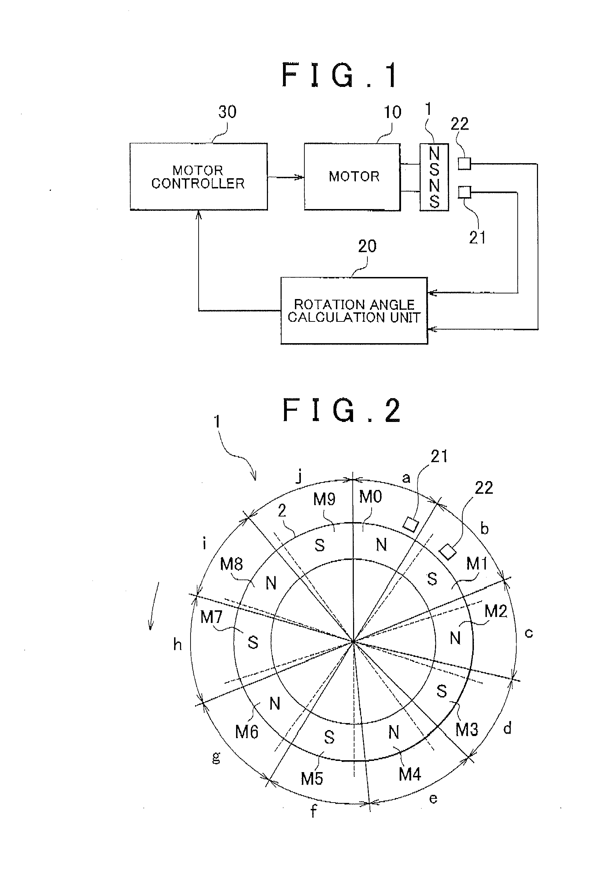

Hereinafter, an example embodiment of the invention will be described in detail with reference to the accompanying drawings. In the example embodiment, the invention is embodied as a rotation angle detection device that detects the rotation angle of a rotor of a brushless motor. FIG. 1 schematically shows the configuration of the rotation angle detection device according to the example embodiment of the invention. The rotation angle detection device includes a detection rotor 1 (will hereinafter be simply referred to as "rotor 1") that rotates as a brushless motor 10 runs. As shown in FIG. 2, the rotor 1 has a cylindrical magnet 2 with a plurality of magnetic pole pairs. The number of magnetic pole pairs of the magnet 2 corresponds to the number of magnetic pole pairs of the rotor of the brushless motor 10. More specifically, the rotor 1 has multiple magnetic poles that are arranged in the circumferential direction. In this example embodiment, the magnet 2 has five magnetic pole pairs (M0, M1), (M2, M3), (M4, M5), (M6, M7), and (M8, M9). That is, the magnet 2 has ten magnetic poles M0 to M9.

The circumferential lengths of the respective magnetic poles of the rotor of the brushless motor 10 are all equal to each other. That is, the angular widths of the respective magnetic poles of the rotor of the brushless motor 10 are all equal to each other, that is, they are all 36 degrees. Thus, the angular width of each magnetic pole pair of the rotor of the brushless motor 10 is 72 degrees in mechanical angle, and this corresponds to an electric angle of 360 degrees. On the other hand, as shown in FIG. 2, the angular widths (a, c, e, g, i) of the north (N) poles M0, M2, M4, M6, and M8, among the magnetic poles M0 to M9 of the rotor 1, are different from each other. That is, the magnetized areas of the respective N poles are different from each other. Further, the angular widths (b, d, f, h) of the south (S) poles M1, M3, M5, and M7 (i.e., four S poles out of five) are different from each other, and the angular width (j) of the S pole M9 is equal to the angular width (f) of the S pole M5. That is, the magnetic areas of the S poles M1, M3, M5, and M7 are different from each other, and the magnetic area of the S pole M9 is equal to that of the S pole M5.

In this example embodiment, the angular widths of the magnetic poles M0 to M9 are set as shown in Table 1 below. Note that each angular width in Table 1 is a value obtained by multiplying the mechanical angle corresponding to the angular width by the number of the magnetic pole pairs (i.e., 5 in this example embodiment). Further, note that the broken lines in FIG. 2 show divisional sections which are obtained by dividing the rotor 1 in the circumferential direction at angular intervals of 36 degrees (i.e., 180 degrees in electric angle).

Table 1

| Magnetic Pole | Angular Width (deg.) |
| --- | --- |
| M0 | 170 |
| M1 | 165 |
| M2 | 160 |
| M3 | 170 |
| M4 | 165 |
| M5 | 190 |
| M6 | 195 |
| M7 | 195 |
| M8 | 200 |
| M9 | 190 |

Two magnetic sensors 21 and 22 are provided around the rotor 1 such that the angular interval, about the rotation axis of the rotor 1, between the magnetic sensors 21 and 22 is 18 degrees (an example predetermined angle), which is 90 degrees in electric angle. These two magnetic sensors 21 and 22 will hereinafter be referred to as "first magnetic sensor 21" and "second magnetic sensor 22", respectively, where necessary. The magnetic sensors 21 and 22 may each be, for example, a magnetic sensor that includes an element of which the electric characteristics change under the influence of a magnetic filed, such as a Hall element and a magnetoresistance element (MR element).

The arrow in FIG. 2 represents the normal rotation direction of the rotor 1. Thus, the rotation angle of the rotor 1 increases as the rotor 1 rotates in the normal direction, and decreases as the rotor 1 rotates in the reverse direction.

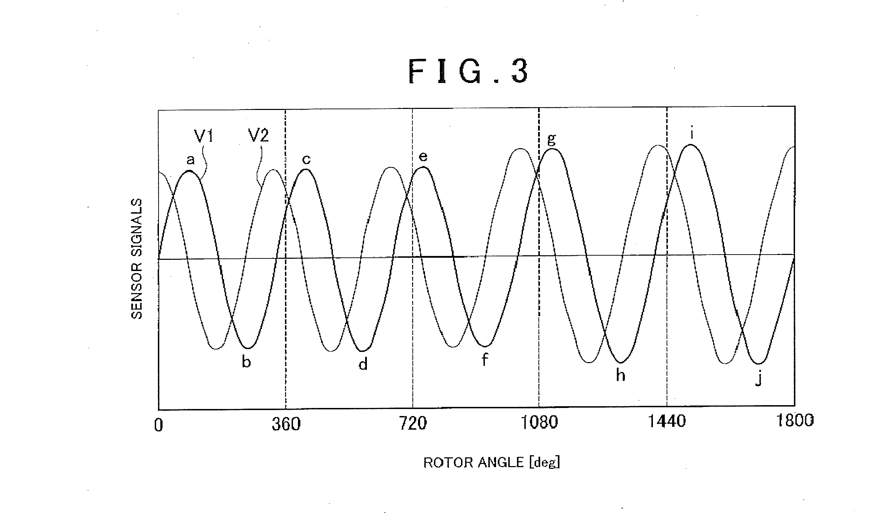

As shown in FIG. 3, the magnetic sensors 21 and 22 output, respectively, sinusoidal waveform signals V1 and V2 (will hereinafter be referred to "sinusoidal signals V1 and V2" where necessary), as the rotor 1 rotates. Note that the horizontal axis of FIG. 3 represents a rotor angle (deg.) that is an angle obtained by multiplying the mechanical angle by the number of the magnetic pole pairs (i.e., 5 in this example embodiment). Further, note that a to j at the respective peaks of the sinusoidal signal V1 in FIG. 3 represent the magnetic pole regions that the first magnetic sensor 21 senses at the time points corresponding to the respective peaks.

As the rotor 1 rotates by an angle corresponding to the angular width of a single magnetic pole, the magnetic sensors 21 and 22 each output a half cycle sinusoidal signal. However, because the angular widths of the magnetic poles are not equal to each other in this example embodiment, the half cycles of the sinusoidal signal output from each magnetic sensor, which correspond to the respective magnetic poles, are not equal to each other. Further, the peak values of the output signal V1 of the magnetic sensor 21 are different among the magnetic poles, except that the peak values corresponding to the magnetic poles M5 and M9 are equal to each other. Likewise, the peak values of the output signal V2 of the magnetic sensor 22 are different among the magnetic poles, except that the peak values corresponding to the magnetic poles M5 and M9 are equal to each other.

In the following descriptions, the absolute rotation angle of the rotor 1 with respect to a predetermined reference position will be referred to as "absolute rotation angle (mechanical angle) $\theta_A$" of the rotor 1. The angular range of one turn of the rotor 1 is divided into five divisional sections (a + b, c + d, e + f, g + h, and i + j) that correspond to the angular widths of the five magnetic pole pairs. In this example embodiment, the starting position and ending position of each divisional section are defined as 0 degrees and 360 degrees, respectively. Then, the angle of the rotor 1, corresponding to the absolute rotation angle $\theta_A$, which is expressed in the range of 0 to 360 degrees of each divisional section will be referred to as "relative rotation angle $\theta_R$" of the rotor 1. Note that the angular widths of the five divisional sections are not equal to each other.

The first magnetic sensor 21 outputs an output signal of V1 = A1 ● $\sin\theta_R$ for each of the divisional sections that correspond to the five magnetic pole pairs, and the second magnetic sensor 22 outputs an output signal of V2 = A2 ● $\cos\theta_R$ for each of the divisional sections that correspond to the five magnetic pole pairs. Note that A1 and A2 each represent an amplitude. The amplitude A1 varies from magnetic pole to magnetic pole, and the amplitude A2 also varies from magnetic pole to magnetic pole. Further, $\theta_R$ represents the relative rotation angle $\theta_R$ of the rotor 1 in each divisional section.

If the amplitude A1 of the output signal V1 and the amplitude A2 of the output signal V2 are equal to each other, the relative rotation angle $\theta_R$ of the rotor 1 in each divisional section may be calculated by using the output signals V1 and V2, according to Expression 3 shown below.

$$\theta_R = \tan^{-1}(\sin\theta_R / \cos\theta_R)$$

$$= \tan^{-1}(V1 / V2) \qquad \text{Expression 3}$$

Referring back to FIG. 1, the output signal V1 of the first magnetic sensor 21 and the output signal V2 of the second magnetic sensor 22 are input into a rotation angle calculation unit 20. The rotation angle calculation unit 20 calculates the relative rotation angle $\theta_R$ of the rotor 1 based on the output signal V1 of the first magnetic sensor 21 and the output signal V2 of the second magnetic sensor 22. Further, the rotation angle calculation unit 20 calculates the absolute rotation angle (mechanical angle) $\theta_A$ of the rotor 1 based on the calculated relative rotation angle $\theta_R$ of the rotor 1, etc. Then, the rotation angle calculation unit 20 calculates an electric angle $\theta_E$ of the rotor of the brushless motor 10 based on the calculated absolute rotation angle $\theta_A$ of the rotor 1. The rotation angle calculation unit 20 is constituted of, for example, a microcomputer that includes a CPU (Central Processing Unit) and memories (ROM, RAM, a rewritable nonvolatile memory, etc.).

The electric angle $\theta_E$ calculated by the rotation angle calculation unit 20 is provided to a motor controller 30. The motor controller 30 then controls the brushless motor 10 based on the electric angle $\theta_E$ provided from the rotation angle calculation unit 20 and a given command value(s). In the following, the operation of the rotation angle calculation unit 20 will be described. The rewritable nonvolatile memory of the rotation angle calculation unit 20 stores amplitude correction tables for the magnetic sensors 21 and 22.

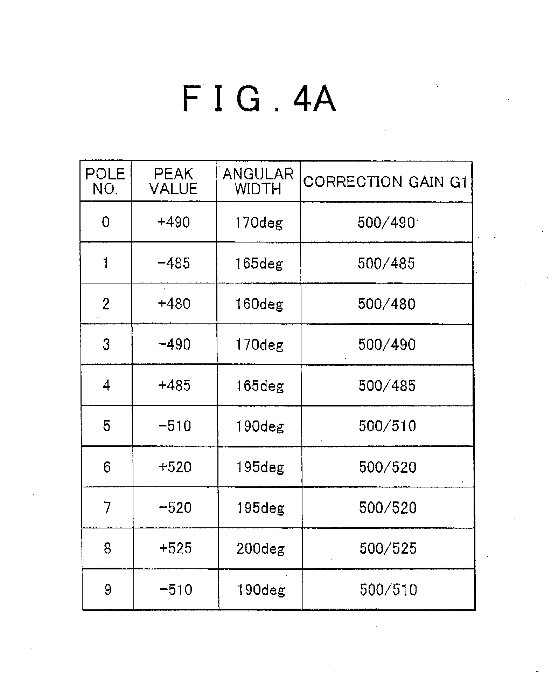

FIG. 4A is an example of the amplitude correction table for the first magnetic sensor 21 (will hereinafter be referred to as "first table" where necessary). The first table stores the peak value (a positive peak value or a negative peak value) of the output signal V1 of the first magnetic sensor 21, the magnetic pole angular width (deg.), and a correction gain G1 for each of the magnetic poles M0 to M9, which are denoted by the pole numbers 0 to 9, respectively. However, it is to be noted that the values of the angular widths in the first table are values each obtained by multiplying the mechanical angle corresponding to the angular width by the number of the magnetic pole pairs (i.e., 5 in this example embodiment) as mentioned earlier in the descriptions on Table 1. The correction gain G1 is a gain for correcting the variations, among the magnetic poles, in amplitude of the signal output from the first magnetic sensor 21.

The amplitude correction gain G1 for a given magnetic pole is calculated by using the peak value (a positive peak value or a negative peak value) of the output signal V1 that the first magnetic sensor 21 outputs for the given magnetic pole and a reference amplitude, according to Expression 4 shown below. The reference amplitude is, for example, a value corresponding to the peak value (an absolute value) of the output signal V1 that the first magnetic sensor 21 outputs for a magnetic pole of which the angular width (a product of the mechanical angle and the number of magnetic pole pairs) is 180 degrees. The reference amplitude is a predetermined value, and is 500 in this example embodiment.

$$G1 = \text{Reference amplitude} / | \text{Peak value} | \qquad \text{Expression 4}$$

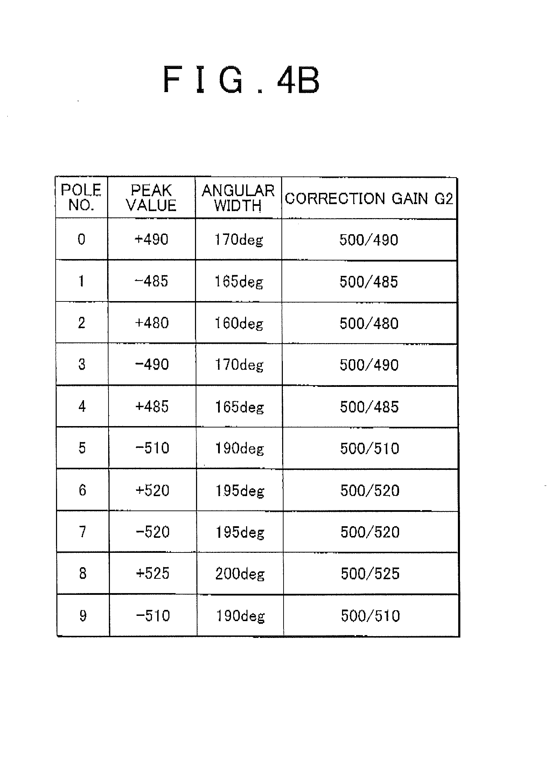

FIG. 4B is an example of the amplitude correction table for the second magnetic sensor 22 (will hereinafter be referred to as "second table" where necessary). The second table stores the peak value (a positive peak value or a negative peak value) of the output signal V2 of the second magnetic sensor 22, the magnetic pole angular width (deg.), and a correction gain G2 for each of the magnetic poles M0 to M9, which are denoted by the pole numbers 0 to 9, respectively. The correction gain G2 is a gain for correcting the variations, among the magnetic poles, in amplitude of the signal output from the second magnetic sensor 22. It is to be noted that although the peak values of the output signal V2 of the second magnetic sensor 22, which correspond to the respective magnetic poles, shown in FIG. 4B are, for descriptive convenience, equal to the peak values of the output signal V1 of the first magnetic sensor 21, which correspond to the respective magnetic poles, shown in FIG. 4A, they may be different from each other.

The correction gain G2 for a given magnetic pole is calculated by using the peak value (a positive peak value or a negative peak value) of the output signal V2 that the second magnetic sensor 22 outputs for the given magnetic pole and a reference amplitude, according to Expression 5 shown below. The reference amplitude is, for example, a value corresponding to the peak value (an absolute value) of the output signal V2 that the second magnetic sensor 22 outputs for a magnetic pole of which the angular width (a product of the mechanical angle and the number of magnetic pole pairs) is 180 degrees. The reference amplitude is a predetermined value, and is 500 in this example embodiment.

$$G2 = \text{Reference amplitude} / | \text{Peak value} | \qquad \text{Expression 5}$$

The peak values and correction gains may be stored in the amplitude correction tables before shipment of the brushless motor 10 or after shipment of the brushless motor 10. In the latter case, for example, the peak values are detected during control over the brushless motor 10 and then stored in the amplitude correction tables, and the correction gains are set based on the detected peak values and then stored in the amplitude correction tables. Note that the peak values and correction gains to be stored in the amplitude correction tables may be set using values in data obtained in one cycle or using the averages of values in data obtained in multiple cycles.

In this example embodiment, when the rotation speed of the rotor 1 is equal to or lower than a predetermined speed, the rotation angle calculation unit 20 detects a peak value of the output signal V1 of the first magnetic sensor 21 or a peak value of the output signal V2 of the second magnetic sensor 22, and then identifies, based on the detected peak value, the magnetic poles presently sensed by the first magnetic sensor 21 and the second magnetic sensor 22. On the other hand, when the rotation speed of the rotor 1 is higher than the predetermined speed, the rotation angle calculation unit 20 detects the time point of a zero-crossing of the output signal V1 of the first magnetic sensor 21 or the time point of a zero-crossing of the output signal V2 of the second magnetic sensor 22, and then identifies the magnetic poles presently sensed by the first magnetic sensor 21 and the second magnetic sensor 22 based on the detected zero-crossing time point. This control based on zero-crossing detection is executed because there is a possibility of failure to detect the peaks of the output signals V1 and V2 when the rotor 1 is rotating at a high speed.

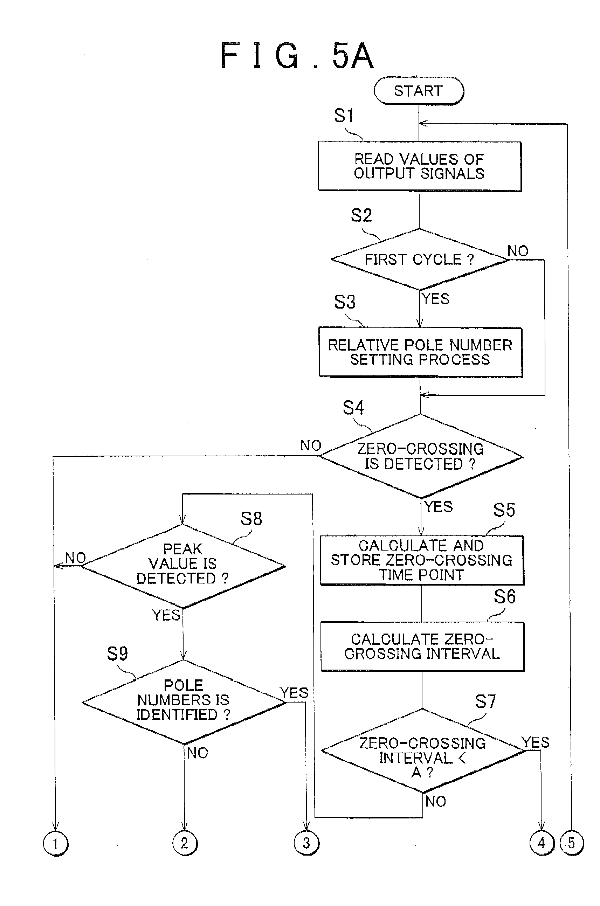

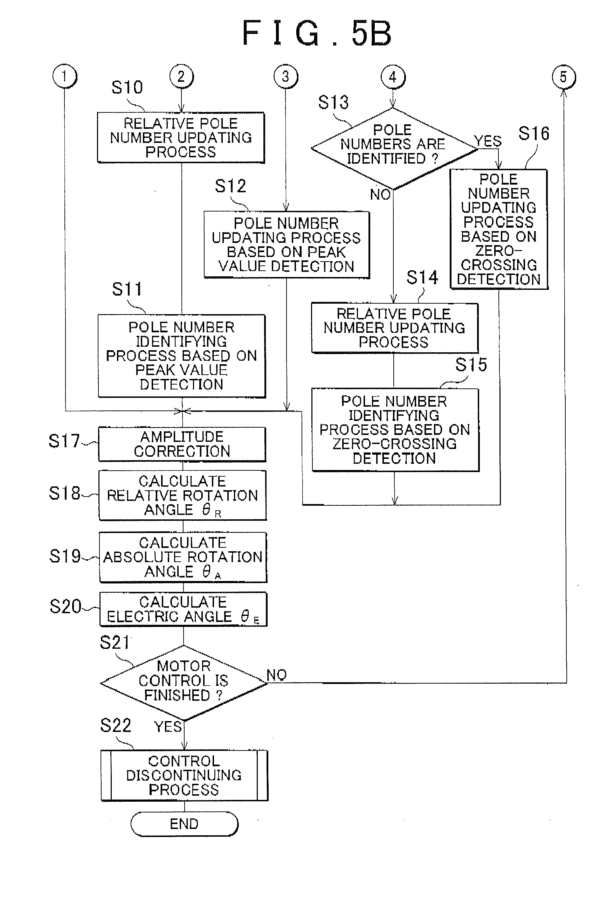

The flowchart in FIG. 5 illustrates the procedure of a rotation angle calculation routine executed by the rotation angle calculation unit 20. In the following, the pole number of the magnetic pole presently sensed by the first magnetic sensor 21 is expressed by a variable p1, while the pole number of the magnetic pole presently sensed by the second magnetic sensor 22 is expressed by a variable p2. Further, the magnetic pole sensed by the first magnetic sensor 21 at the start of the rotation angle calculation routine is used as a reference magnetic pole, and the magnetic poles are assigned with relative pole numbers that are set relative to the reference magnetic pole. The relative pole number of the magnetic pole presently sensed by the first magnetic sensor 21 ("first relative pole number") is expressed by a variable p1', while the relative pole number of the magnetic pole presently sensed by the second magnetic sensor 22 ("second relative pole number") is expressed by a variable p2'. In this example embodiment, the reference magnetic pole, which is the magnetic pole that the first magnetic sensor 21 is sensing at the start of the rotation angle calculation routine, is assigned with the relative pole number of 0, for example.

After the start of the rotation angle calculation routine, the rotation angle calculation unit 20 first reads the value of the output signal V1 of the first magnetic sensor 21 and the value of the output signal V2 of the second magnetic sensor 22 (step S1). The process of reading the values of the respective output signals V1 and V2 is executed at given calculation cycles (sampling intervals Ts). It is to be noted that the memory (e.g., RAM) of the rotation angle calculation unit 20 stores the output signal values that have been read so far since the calculation cycle that is multiple cycles before the present calculation cycle.

In this example embodiment, further, in order to detect the peak value (a positive peak value or a negative peak value) of the output signal V1, the value of the output signal V1, which has the largest absolute value among the values of the output signal V1 that have been read so far, is stored in the memory as a candidate of the peak value of the output signal V1. Likewise, in order to detect the peak value (a positive peak value or a negative peak value) of the output signal V2, the value of the output signal V2, which has the largest absolute value among the values of the output signal V2 that have been read so far, is stored in the memory as a candidate of the peak value of the output signal V2. However, it is to be noted that each of the candidate peak values is reset to zero at a given time point when a zero-crossing of the corresponding output signal is detected, as will be described later.

After the values of the respective output signals V1 and V2 are read in step S1, the rotation angle calculation unit 20 determines whether the present cycle of the rotation angle calculation routine is the first cycle after the start of this routine (step S2). If the present cycle of the rotation angle calculation routine is the first cycle after the start of this routine (step S2: YES), the rotation angle calculation unit 20 executes a relative pole number setting process (step S33). Specifically, at this time, the rotation angle calculation unit 20 sets a first relative pole number p1' to 0. Further, at this time, if the first magnetic sensor 21 and the second magnetic sensor 22 are sensing the same magnetic pole, the rotation angle calculation unit 20 sets the second relative pole number p2' to 0. If the first magnetic sensor 21 and the second magnetic sensor 22 are sensing different magnetic poles, the rotation angle calculation unit 20 sets the second relative pole number p2' to 1.

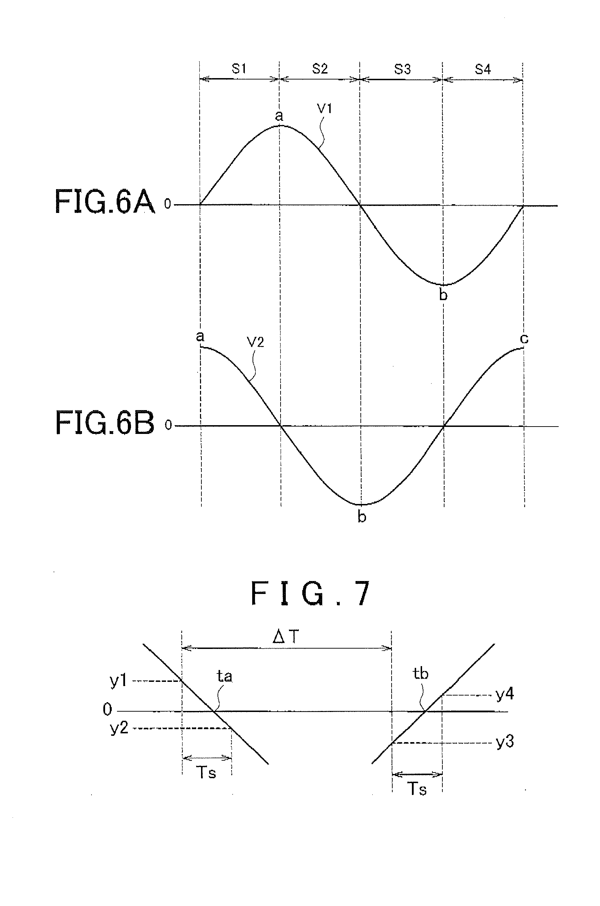

More details will be described. For example, when the magnetic pole pair of the magnetic poles M0 and M1 of the rotor 1 passes by the first magnetic sensor 21, the waveform of the output signal V1 of the first magnetic sensor 21 is as schematically shown in FIG. 6A, and the waveform of the output signal V2 of the second magnetic sensor 22 is as schematically shown in FIG. 6B. In FIGs. 6A and 6B, the region S1 is a region where the first magnetic sensor 21 and the second magnetic sensor 22 are both sensing the magnetic pole M0. The region S2 is a region where the first magnetic sensor 21 is sensing the magnetic pole M0 while the second magnetic sensor 22 is sensing the second magnetic pole M1. The region S3 is a region where the first magnetic sensor 21 and the second magnetic sensor 22 are both sensing the second magnetic pole M1. The region S4 is a region where the first magnetic sensor 21 is sensing the first magnetic pole M1 while the second magnetic sensor 22 is sensing the magnetic pole M2.

That is, in the regions S1 and S3, the pole number of the magnetic pole presently sensed by the first magnetic sensor 21 and the pole number of the magnetic pole presently sensed by the second magnetic sensor 22 are the same. In regions S2 and S4, on the other hand, the pole number of the magnetic pole presently sensed by the second magnetic sensor 22 is larger, by one, than the pole number of the magnetic pole presently sensed by the first magnetic sensor 21. In the region S1, the values of the output signals V1 and V2 satisfy a first condition that the value of the output signal V1 is equal to or larger than 0 ($V1 \geq 0$) and the value of the output signal V2 is larger than 0 ($V2 > 0$). In the region S2, the values of the output signals V1 and V2 satisfy a second condition that the value of the output signal V1 is equal to or larger than 0 ($V1 \geq 0$) and the value of the output signal V2 is equal to or smaller than 0 ($V2 \leq 0$). In the region S3, the values of the output signals V1 and V2 satisfy a third condition that the values of the output signals V1 and V2 are both smaller than 0 ($V1 < 0$ and $V2 < 0$). In the region S4, the values of the output signals V1 and V2 satisfy a fourth condition that the value of the output signal V1 is smaller than 0 ($V1 < 0$) and the value of the output signal V2 is equal to or larger than 0 ($V2 \geq 0$).

When the first or third condition is satisfied, the rotation angle calculation unit 20 sets the first relative pole number p1' and the second relative pole number p2' to 0. When the second or fourth condition is satisfied, the rotation angle calculation unit 20 sets the first relative pole number p1' to 0 and sets the second relative pole number p2' to 1. After setting the relative pole numbers p1' and p2', the rotation angle calculation unit 20 proceeds to step S4. Referring back to step S2, if it is determined in step S2 that the present cycle of the rotation angle calculation routine is not the first cycle after the start of this routine (step S2: NO), the rotation angle calculation unit 20 proceeds to step S4.

In step S4, the rotation angle calculation unit 20 determines whether a zero-crossing of the output signal V1, which inverses the sign of the value of the output signal V1, is detected, based on the values of the output signal V1 stored in the memory, and determines whether a zero-crossing of the output signal V2, which inverses the sign of the value of the output signal V2, is detected, based on the values of the output signal V2 stored in the memory. If no zero-crossing is detected for the output signals V1 and V2 (step S4: NO), the rotation angle calculation unit 20 then proceeds to step S17. On the other hand, if a zero-crossing is detected for one of the output signal V1 and the output signal V2 in step S4, the rotation angle calculation unit 20 then calculates the time point at which the zero-crossing occurred (will hereinafter be referred to as "zero-crossing time point" where necessary) and then stores the calculated zero-crossing time point in the memory (step S5). At this time, the zero-crossing time point is stored in such a manner that it is possible to specify which of the output signals V1 and V2 the calculated zero-crossing time point corresponds to.

In the meantime, the zero-crossing time point may be a time point at which an inversion of the sign of the value of the output signal V1 or an inversion of the sign of the value of the output signal V2 is detected. Further, the zero-crossing time point may be determined through a linear interpolation between two sensor values (i.e., two sampling values), one of which is obtained before an inversion of the sign of the value of the output signal V1 or V2 and the other of which is obtained after the inversion. For example, as shown in FIG. 7, when the value of the output signal (V1 or V2) detected immediately before its sign is inverted is denoted by y1 and the value of the output signal (V1 or V2) detected immediately after its sign is inverted is denoted by y2, if the time point at which the output signal value y1 is detected is used as a reference time point, a zero-crossing time point ta is calculated according to Expression 6 shown below.

$$ta = Ts \times \{y1 / (y1 - y2)\} \qquad \text{Expression 6}$$

In Expression 6 shown above, Ts represents the sampling interval of each output signal V1 and V2. For example, the zero-crossing time point ta is 0.0667 msec (ta = 0.0667) when y1 is 0.2 (y1 = 0.2), y2 is -0.1 (y2 = -0.1), and Ts is 100 $\mu$sec (Ts = 100 $\mu$sec). Further, as shown in FIG. 7, when the output signal value detected immediately before the next sign inversion thereof is denoted by y3 and the output signal value detected immediately after the next sign inversion is denoted by y4, if the time point at which the output signal value y1 is detected is used as a reference time point, a zero-crossing time point tb is calculated according to Expression 7 shown below.

$$tb = Ts \times \{y3 / (y3 - y4)\} + \Delta T \qquad \text{Expression 7}$$

In Expression 7 shown above, $\Delta T$ represents the time interval from when the output signal value y1 is detected to when the output signal value y3 is detected. For example, the zero-crossing time point tb is 44.0667 msec (tb = 44.0667 msec) when y3 is -0.2 (y3 = -0.2), y4 is 0.1 (y4 = 0.1), Ts is 100 $\mu$sec (Ts = 100 $\mu$sec), and $\Delta T$ is 44 msec ($\Delta T$ = 44 msec).

Referring back to FIG. 5, after calculating the zero-crossing time point in step S5 as described above, the rotation angle calculation unit 20 calculates the time interval between the zero-crossing time point calculated in the preset cycle and the zero-crossing time point calculated last for the same output signal (i.e., the output signal V1 or the output signal V2) (step S6). This time interval will hereinafter be referred to as "zero-crossing interval" where necessary. Meanwhile, in a case where no zero-crossing time point is obtained before the present cycle and therefore no zero-crossing interval is calculated in step S6, the rotation angle calculation unit 20 resets the candidate peak value of the output signal, for which the zero-crossing is detected in step S4, to zero, and then proceeds to step S17 (not shown in FIG. 5).

After calculating the zero-crossing interval in step S6 as described above, the rotation angle calculation unit 20 determines whether the calculated zero-crossing interval is smaller than a predetermined value A, thereby determining whether the rotation speed of the rotor 1 is higher than a predetermined speed (step S7). That is, in this step, the rotation angle calculation unit 20 determines that the rotation speed of the rotor 1 is higher than the predetermined speed if the calculated zero-crossing interval is smaller than the predetermined value A, and determines that the rotation speed of the rotor 1 is equal to or lower than the predetermined speed if the calculated zero-crossing interval is equal to or larger than the predetermined value A. It is to be noted that the rotation angle calculation unit 20 may determine whether the rotation speed of the rotor 1 is higher than the predetermined speed, by determining whether the sum of the zero-crossing intervals calculated over one turn of the rotor 1 is smaller than a predetermined value. In this case, an error in the detection of rotation speed of the rotor 1, which may be caused by an error in the zero-crossing interval, may be reduced.

If it is determined that the zero-crossing interval is equal to or larger than the predetermined value A (i.e., the rotation speed of the rotor 1 is equal to or lower than the predetermined speed) (step S7: NO), the rotation angle calculation unit 20 then determines whether a peak value (a positive peak value or a negative peak value) of the output signal for which the zero-crossing is detected in step S4 is detected (step S8). In the following, the determination process in step S8 will be referred to as "peak value detection process" where necessary.

The peak value detection process will be described in more detail. In the following, the magnetic sensor that outputs the output signal for which the zero-crossing is detected in step S4 will be referred to as "peak value detection target magnetic sensor" where necessary. First, the rotation angle calculation unit 20 determines whether the magnetic pole sensed by the peak value detection target magnetic sensor is changed from one to another. Specifically, at this time, the rotation angle calculation unit 20 determines whether the magnetic pole that the peak value detection target magnetic sensor is sensing when a zero-crossing is detected last for the output signal of the peak value detection target magnetic sensor and the magnetic pole that the peak value detection target magnetic sensor is sensing when the zero-crossing is detected this time are different from each other or the same. That is, for example, the magnetic pole sensed when a zero-crossing is detected last and the magnetic pole sensed when a zero-crossing is detected this time may be the same if the rotation direction of the rotor 1 is reversed.

The determination described above, for example, may be made based on whether the direction in which the rotor 1 is rotating at the moment when the zero-crossing is detected last and the direction in which the rotor 1 is presently rotating coincide with each other. More specifically, if these two directions coincide with each other, the rotation angle calculation unit 20 determines that the magnetic pole sensed by the peak value detection target magnetic sensor is changed from one to another. In contrast, if these two directions described above do not coincide with each other, the rotation angle calculation unit 20 determines that the magnetic pole sensed by the peak value detection target magnetic sensor is not changed.

If it is determined that the magnetic pole sensed by the peak value detection target magnetic sensor is changed from one to another, the rotation angle calculation unit 20 determines that a peak value is detected, and then determines the candidate peak value corresponding to the peak value detection target magnetic sensor as the peak value. On the other hand, if it is determined that the magnetic pole sensed by the peak value detection target magnetic sensor is not changed, the rotation angle calculation unit 20 determines that no peak value is detected.

The rotation direction of the rotor 1 may be determined based on, for example, the phases of the output signals V1 and V2 of the respective magnetic sensors 21 and 22. More specifically, when the phase of the output signal V2 is advanced with respect to the phase of the output signal V1 (e.g., in a case where a zero-crossing interval of the output signal V2 is calculated for one of the magnetic poles and then a zero-crossing interval of the output signal V1 is calculated for this magnetic pole), it is determined that the rotor 1 is rotating in the normal direction. On the other hand, when the phase of the output signal V1 is advanced with respect to the phase of the output signal V2 (e.g., in a case where a zero-crossing interval of the output signal V1 is calculated for one of the magnetic poles and then a zero-crossing interval of the output signal V2 is calculated for this magnetic pole), it is determined that the rotor 1 is rotating in the reverse direction.

If it is determined in step S8 that no peak value is detected (step S8: NO), the rotation angle calculation unit 20 resets the candidate peak value of the output signal, for which the zero-crossing is detected in step S4, to zero, and then proceeds to step S 17. On the other hand, if it is determined in step S8 that a peak value is detected (step S8: YES), the rotation angle calculation unit 20 resets the candidate peak value of the output signal, for which the zero-crossing is detected in step S4, to zero. The rotation angle calculation unit 20 determines whether the pole number p1 of the magnetic pole presently sensed by the first magnetic sensor 21 and the pole number p2 of the magnetic pole presently sensed by the second magnetic sensor 22 are already identified after the start of the rotation angle calculation routine, through a pole number identifying process in step S11 or through a pole number identifying process in step S15 (step S9). Note that the pole number identifying processes in steps S11 and S15 will be described later.

In a case where the pole number p1 of the magnetic pole presently sensed by the first magnetic sensor 21 and the pole number p2 presently sensed by the second magnetic sensor 22 are not identified (step S9: NO), the rotation angle calculation unit 20 executes a relative pole number updating process (step S10). Specifically, at this time, the rotation angle calculation unit 20 updates, based on the rotation direction of the rotor 1, the relative pole number p1' or p2' that is already set to the magnetic pole presently sensed by the magnetic sensor for which the peak value is detected in the peak value detection process in step S8 as described above. More specifically, at this time, the rotation angle calculation unit 20 changes, in accordance with the rotation direction of the rotor 1, the relative pole number p1' or p2' that is already set to the magnetic pole presently sensed by the magnetic sensor for which the peak value is detected in the peak value detection process in step S8, to the number that is larger than or smaller than the present number by one.

When the rotor 1 is rotating in the normal direction (i.e., the direction indicated by the arrow in FIG. 2), the rotation angle calculation unit 20 updates the relative pole number p1' or p2', which is already set, to the number that is larger than the present number by one. When the rotor 1 is rotating in the reverse direction, the rotation angle calculation unit 20 updates the relative pole number p1' or p2', which is already set, to the number that is smaller than the present number by one. It is to be noted that the relative pole number that is smaller by one than the relative pole number of 0 is 9, and the relative pole number that is larger by one than the relative pole number of 9 is 0.

After finishing the relative pole number updating process in step S 10, the rotation angle calculation unit 20 then executes a pole number identifying process based on peak value detection (step S11). Specifically, at this time, the rotation angle calculation unit 20 identifies the pole number p1 of the magnetic pole presently sensed by the first magnetic sensor 21 and the pole number p2 of the magnetic pole presently sensed by the second magnetic sensor 22, based on the peak value detected in step S8, etc. More specifically, at this time, the rotation angle calculation unit 20 first identifies the pole number p1 or p2 of the magnetic pole presently sensed by the magnetic sensor for which the peak value (a positive peak value or a negative peak value) is detected in the peak value detection process in step S8, based on this peak value and the content of the amplitude correction table (the first or second table) corresponding to this magnetic sensor. To be more specific, the rotation angle calculation unit 20 identifies, as the pole number p1 or p2 of the magnetic pole presently sensed by the magnetic sensor for which the peak value is detected in the peak value detection process in step S8, the pole number corresponding to the peak value that is closest, among a plurality of peak values stored in the amplitude correction table, to the peak value detected in the peak value detection process in step S8.

Because the peak value of each output signal V1 and V2 changes according to the temperature characteristic of the magnet (the higher the temperature of the magnet is, the smaller the peak value is), the rotation angle calculation unit 20 may correct the values in the amplitude correction table by multiplying each peak value in the amplitude correction table by a magnet temperature coefficient (i.e., a coefficient that becomes smaller as the temperature of the magnet becomes higher), and then identify the pole number of the magnetic pole based on the detected peak value and the corrected values in the amplitude correction table.

However, in a case where the pole number corresponding to the peak value closest to the peak value detected in the peak value detection process in step S8 is the pole number corresponding to the magnetic pole M5 or the pole number corresponding to the magnetic pole M9, the rotation angle calculation unit 20 does not identify the magnetic pole presently sensed by the magnetic sensor for which the peak value is detected in the peak value detection process in step S8. Referring back to the routine shown in FIG. 5, after identifying the pole number p1 or p2 of the magnetic pole presently sensed by the magnetic sensor for which the peak value is detected in the peak value detection process in step S8, the rotation angle calculation unit 20 identifies the magnetic pole presently sensed by the other magnetic sensor based on the pole number p1 or p2 that is identified as described above, and the first relative pole number p1', and the second relative pole number p2'. For example, when a peak value of the output signal V1 is detected in the peak value detection process in step S8 and therefore the pole number p1 of the magnetic pole presently sensed by the first magnetic sensor 21 is identified, the rotation angle calculation unit 20 identifies the pole number p2 of the magnetic pole presently sensed by the second magnetic sensor 22 according to Expression of p2 = (p1 - p1') + p2'. On the other hand, when a peak value of the output signal V2 is detected in the peak value detection process in step S8 and therefore the pole number p2 of the magnetic pole presently sensed by the second magnetic sensor 22 is identified, the rotation angle calculation unit 20 identifies the pole number p1 of the magnetic pole presently sensed by the first magnetic sensor 21 according to Expression of p1 = (p2 - p2') + p1'. In this way, the pole number p1 of the magnetic pole presently sensed by the first magnetic sensor 21 and the pole number p2 of the magnetic pole presently sensed by the second magnetic sensor 22 are both identified. After finishing the process in step S11, the rotation angle calculation unit 20 proceeds to step S 17.

Referring back to step S9, if it is determined in this step that the pole number p1 of the magnetic pole presently sensed by the first magnetic sensor 21 and the pole number p2 of the magnetic pole presently sensed by the second magnetic sensor 22 are already identified (step S9: YES), the rotation angle calculation unit 20 then executes a pole number updating process based on peak value detection (step S12). Specifically, at this time, the rotation angle calculation unit 20 updates, based on the rotation direction of the rotor 1, the identified pole number p1 or p2 of the magnetic pole presently sensed by the magnetic sensor for which the peak value is detected in the peak value detection process in step S8. More specifically, at this time, the rotation angle calculation unit 20 changes, in accordance with the rotation direction of the rotor 1, the identified pole number p1 or p2 of the magnetic pole presently sensed by the magnetic sensor for which the peak value is detected in the peak value detection process in step S8, to the number that is larger than or smaller than the present number by one.

More specifically, when the rotor 1 is rotating in the normal direction (i.e., the direction indicated by the arrow in FIG. 2), the rotation angle calculation unit 20 updates the identified pole number p1 or p2 of the magnetic pole presently sensed by the magnetic sensor for which the peak value is detected in the peak value detection process in step S8, to the number that is larger than the present number by one. On the other hand, when the rotor 1 is rotating in the reverse direction, the rotation angle calculation unit 20 updates the identified pole number p1 or p2 of the magnetic pole presently sensed by the magnetic sensor for which the peak value is detected in the peak value detection process in step S8, to the number that is smaller than the present number by one. It is to be noted that the pole number that is smaller by one than the pole number of 0 is 9, and the pole number that is larger by one than the pole number of 9 is 0. After finishing the process in step S12, the rotation angle calculation unit 20 proceeds to step S 17.

Referring back to step S7, if it is determined in step S7 that the zero-crossing interval is smaller than the predetermined value A (i.e., the rotation speed of the rotor 1 is higher than the predetermined speed) (step S7: YES), the rotation angle calculation unit 20 resets the candidate peak value of the output signal, for which the zero-crossing is detected in step S4 as described earlier, to zero, and then proceeds to step S 13. In step S 13, the rotation angle calculation unit 20 determines whether the magnetic poles presently sensed by the magnetic sensors 21 and 22 are already identified after the start of the rotation angle calculation routine through the pole number identifying process in step S11 or through the pole number identifying process in step S 15, which will be described later. If the magnetic poles presently sensed by the magnetic sensors 21 and 22 are not identified (step S13: NO), the rotation angle calculation unit 20 then executes a relative pole number updating process (step S14). Specifically, at this time, the rotation angle calculation unit 20 updates, based on the rotation direction of the rotor 1, the relative pole number p1' or p2' that is already set to the magnetic pole presently sensed by the magnetic sensor for which the zero-crossing is detected in step S4 as described earlier. More specifically, at this time, the rotation angle calculation unit 20 changes, in accordance with the rotation direction of the rotor 1, the relative pole number p1' or p2' that is already set to the magnetic pole presently sensed by the magnetic sensor for which the zero-crossing is detected, to the number that is larger than or smaller than the present number by one.

More specifically, when the rotor 1 is rotating in the normal direction (i.e., the direction indicated by the arrow in FIG. 2), the rotation angle calculation unit 20 updates the relative pole number p1' or p2' that is already set to the magnetic pole presently sensed by the magnetic sensor for which the zero-crossing is detected in step S4, to the number that is larger than the present number by one. On the other hand, when the rotor 1 is rotating in the reverse direction, the rotation angle calculation unit 20 updates the relative pole number p1' or p2' that is already set to the magnetic pole presently sensed by the magnetic sensor for which the zero-crossing is detected in step S4, to the number that is smaller than the present number by one. It is to be noted that the relative pole number that is smaller by one than the relative pole number of 0 is 9, and the relative pole number that is larger by one than the relative pole number of 9 is 0.

After finishing the relative pole number updating process in step S 14, the rotation angle calculation unit 20 executes a pole number identifying process based on zero-crossing detection (step S15). Specifically, at this time, the rotation angle calculation unit 20 identifies the magnetic pole presently sensed by the first magnetic sensor 21 and the magnetic pole presently sensed by the second magnetic sensor 22, based on the zero-crossing interval calculated in step S6, etc. More specifically, at this time, the rotation angle calculation unit 20 first identifies the magnetic pole presently sensed by the magnetic sensor for which the zero-crossing interval is calculated in step S6, based on the zero-crossing interval calculated in step S6, the sum of the zero-crossing intervals over one turn of the rotor 1, which is calculated last based on the output signals of the magnetic sensor for which the zero-crossing interval is calculated in step S6 (note: this sum corresponds to the time required for the rotor 1 to rotate 360 degrees), the rotation direction of the rotor 1, and the amplitude correction table (the first or second table) for the magnetic sensor for which the zero-crossing interval is calculated in step S6.

More specifically, if the zero-crossing interval calculated in step S6 is denoted by Tx and the sum of the zero-crossing intervals over one turn of the rotor 1, which is calculated last based on the output signals of the magnetic sensor for which the zero-crossing interval is calculated in step S6, is denoted by $\Sigma T$, the rotation angle calculation unit 20 calculates a value D corresponding to the angular width of the magnetic pole that the magnetic sensor for which the zero-crossing interval is calculated in step S6 is sensing immediately before present (will hereinafter be referred to as "the last-sensed magnetic pole" where necessary) according to Expression 8 shown below.

$$D = (Tx / \Sigma T) \times 1800 \qquad \text{Expression 8}$$

In Expression 8 shown above, 1800 is the sum of the angular widths (each calculated as a product of the mechanical angle and the number of the magnetic pole pairs) of the magnetic poles M0 to M9. That is, 1800 in Expression 8 represents the rotation angle (electric angle) of one turn of the rotor 1.

The rotation angle calculation unit 20 identifies, as the pole number of the last-sensed magnetic pole, the pole number corresponding to the angular width (a product of the mechanical angle and the number of the magnetic pole pairs) that is closest, among the angular widths of the magnetic poles M0 to M9 stored in the amplitude correction table, to the value D calculated according to Expression 8 above. Then, if the rotor 1 is rotating in the normal direction at this time, the rotation angle calculation unit 20 identifies the pole number that is larger than the pole number of the last-sensed magnetic pole by one, as the pole number of the magnetic pole presently sensed by the magnetic sensor for which the zero-crossing is detected in step S4. On the other hand, if the rotor 1 is rotating in the reverse direction at this time, the rotation angle calculation unit 20 identifies the pole number that is smaller than the pole number of the last-sensed magnetic pole by one, as the pole number of the magnetic pole presently sensed by the magnetic sensor for which the zero-crossing is detected in step S4. It is to be noted that the pole number that is smaller by one than the pole number of 0 is 9, and the pole number that is larger by one than the pole number of 9 is 0.

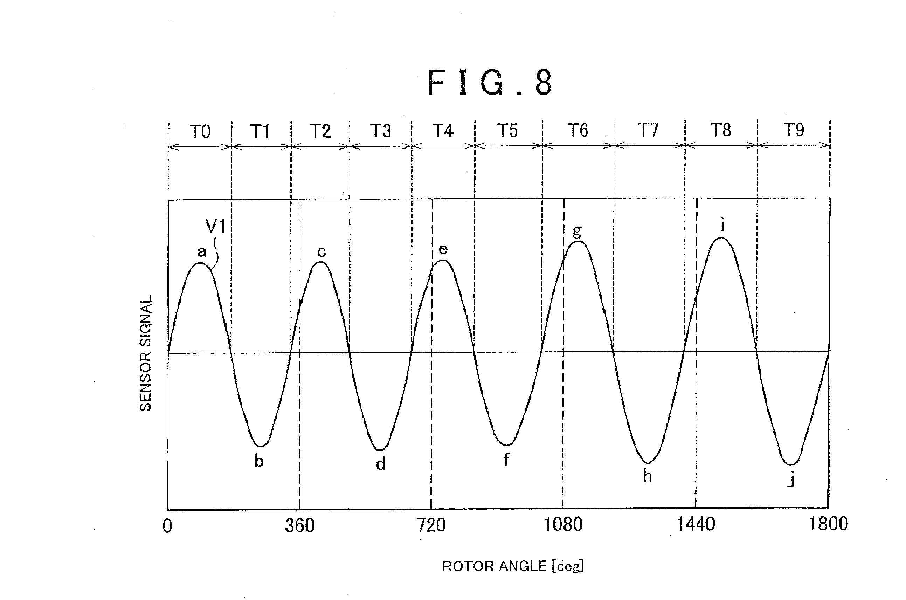

More specifically, in a case where the magnetic sensor for which the zero-crossing interval is calculated in step S6 is the first magnetic sensor 21, the rotor 1 is presently rotating in the normal direction, and the waveform of the output signal V1 of the first magnetic sensor 21 is as shown in FIG. 8, $\Sigma T$ is the sum of zero-crossing intervals T0 to T9, and Tx is one of the zero-crossing intervals T0 to T9. Further, for example, if $\Sigma T$ is 0.05 sec ($\Sigma T$ = 0.05 sec) and Tx is 0.0044 sec (Tx = 0.0044 sec), D is 158.6 (D = 158.6), and therefore the magnetic pole of which the angular width is closest, among those in Table 1, to the value D is the magnetic pole M2. Therefore, the pole number "2", corresponding to the magnetic pole M2, is identified as the pole number of the last-sensed magnetic pole. Because the rotor 1 is rotating in the normal direction at this time, the pole number "3", which is larger than the pole number of the last-sensed magnetic pole by one, is identified as the pole number of the magnetic pole presently sensed by the first magnetic sensor 21 that is the magnetic sensor for which the zero-crossing interval is calculated in step S6 in the example case described above.

However, it is to be noted that if the pole number of the magnetic pole of which the angular width is closest to the value D calculated according to Expression 8 is the pole number corresponding to the magnetic pole M5 or the pole number corresponding to the magnetic pole M9, the rotation angle calculation unit 20 does not identify the magnetic pole presently sensed by the magnetic sensor for which the zero-crossing interval is calculated in step S6. Further, in a case where the zero-crossing intervals of one turn of the rotor 1 are not calculated, the rotation angle calculation unit 20 does not identify the magnetic pole presently sensed by the magnetic sensor for which the zero-crossing interval is calculated in step S6.

If the pole number p1 or p2 of the magnetic pole presently sensed by the magnetic sensor for which the zero-crossing interval is calculated in step S6 is identified, the rotation angle calculation unit 20 identifies the magnetic pole presently sensed by the other magnetic sensor, based on the pole number p1 or p2 of the magnetic pole presently sensed by the magnetic sensor for which the zero-crossing interval is calculated in step S6, the first relative pole number p1', and the second relative pole number p2'. For example, in a case where the magnetic sensor for which the zero-crossing interval is calculated in step S6 is the first magnetic sensor 21 and therefore the pole number p1 of the magnetic pole presently sensed by the first magnetic sensor 21 is identified, the rotation angle calculation unit 20 identifies the pole number p2 of the magnetic pole presently sensed by the second magnetic sensor 22 according to Expression of p2 = (p1 - p1') + p2'. On the other hand, in a case where the magnetic sensor for which the zero-crossing interval is calculated in step S6 is the second magnetic sensor 22 and therefore the pole number p2 of the magnetic pole presently sensed by the second magnetic sensor 22 is identified, the rotation angle calculation unit 20 identifies the pole number p1 of the magnetic pole presently sensed by the first magnetic sensor 21 according to Expression of p1 = (p2 - p2') + p1'. In this way, the pole numbers p1, p2 of the magnetic poles presently sensed by the respective magnetic sensors 21 and 22 are identified. After finishing the process in step S15, the rotation angle calculation unit 20 proceeds to step S 17.

Referring back to step S 13, if it is determined in this step that the pole numbers of the magnetic poles presently sensed by the respective magnetic sensors 21 and 22 are already identified (step S13: YES), the rotation angle calculation unit 20 executes a pole number updating process based on zero-crossing detection (step S16). Specifically, at this time, the rotation angle calculation unit 20 updates, based on the rotation direction of the rotor 1, the pole number p1 or p2 that is already identified as the pole number of the magnetic pole presently sensed by the magnetic sensor for which the zero-crossing is detected in the zero-crossing detection process in step S4. More specifically, at this time, the rotation angle calculation unit 20 changes, in accordance with the rotation direction of the rotor 1, the pole number p1 or p2 of the magnetic pole presently sensed by the magnetic sensor for which the zero-crossing is detected in the zero-crossing detection process in step S4, to the number that is larger than or smaller than the present number by one.

More specifically, when the rotor 1 is rotating in the normal direction, the rotation angle calculation unit 20 updates the identified pole number p1 or p2 of the magnetic pole presently sensed by the magnetic sensor for which the zero-crossing is detected in the zero-crossing detection process in step S4, to the pole number that is larger than the present pole number by one. On the other hand, when the rotor 1 is rotating in the reverse direction, the rotation angle calculation unit 20 updates the identified pole number p1 or p2 of the magnetic pole presently sensed by the magnetic sensor for which the zero-crossing is detected in the zero-crossing detection process in step S4, to the pole number that is smaller than the present pole number by one. It is to be noted that the pole number that is smaller by one than the pole number of 0 is 9, and the pole number that is larger by one than the pole number of 9 is 0. After finishing the process in step S16, the rotation angle calculation unit 20 proceeds to step S 17.

In step S 17, the rotation angle calculation unit 20 performs an amplitude correction on each of the values of the respective output signals V1 and V2 read in step S1. Specifically, at this time, the rotation angle calculation unit 20 extracts the amplitude correction gains G1 corresponding to the presently identified pole number p1 of the magnetic pole presently sensed by the first magnetic sensor 21, from the first table, and extracts the amplitude correction gains G2 corresponding to the presently identified pole number p2 of the magnetic pole presently sensed by the second magnetic sensor 22, from the second table. Then, the rotation angle calculation unit 20 corrects the values of the respective output signals V1 and V2, which are read in step S1, using the gains G1 and G2 extracted from the first and second tables, respectively. If the corrected values of the respective output signals V1 and V2 are denoted by V1' and V2', respectively, V I' and V2' are expressed according to Expressions 9 and 10, respectively.

$$V1' = V1 \times G1 \qquad \text{Expression 9}$$

$$V2' = V1 \times G2 \qquad \text{Expression 10}$$

However, it is to be noted that if the pole number p1 of the magnetic pole presently sensed by the first magnetic sensor 21 and the pole number p2 of the magnetic pole presently sensed by the second magnetic sensor 22 are not identified, the rotation angle calculation unit 20 proceeds to step S18 without correcting the values of the respective output signals V1 and V2 in step S 17.

After executing the amplitude correction in step S17, the rotation angle calculation unit 20 calculates the relative rotation angle $\theta_R$ of the rotor 1 (step S18). Specifically, at this time, the rotation angle calculation unit 20 calculates the relative rotation angle $\theta_R$ of the rotor 1 according to Expression 11 shown below.

$$\theta_R = \tan^{-1}(V1' / V2') \qquad \text{Expression 11}$$

Next, the rotation angle calculation unit 20 calculates the absolute rotation angle (mechanical angle) $\theta_A$ of the rotor 1 based on the relative rotation angle $\theta_R$ of the rotor 1 calculated in step S 18, the pole number p1 of the magnetic pole presently sensed by the first magnetic sensor 21, and the content of the amplitude correction table (the first table) (step S 19). Specifically, at this time, the rotation angle calculation unit 20 identifies the magnetic pole presently sensed by the first magnetic sensor 21, based on the pole number p1 of the magnetic pole presently sensed by the first magnetic sensor 21. Then, the rotation angle calculation unit 20 determines an angular width W of the identified magnetic pole. For example, if the magnetic pole presently sensed by the first magnetic sensor 21 is the first magnetic pole M0 among the ten magnetic poles M0 to M9, the angular width W of this magnetic pole is 170 degrees.

The relative rotation angle $\theta_R$ of the rotor 1, which is calculated in step S 18, is an angle calculated on the assumption that the angular width of the magnetic pole presently sensed by the first magnetic sensor 21 is 180 degrees. Therefore, the rotation angle calculation unit 20 corrects (performs a phase correction on) the relative rotation angle $\theta_R$ of the rotor 1, which is calculated in step S18, to a relative rotation angle $\theta_R'$ corresponding to the angular width of the section of the magnetic pole presently sensed by the first magnetic sensor 21, according to Expression 12 shown below.

$$\theta_R' = \theta_R \times (W / 180°) \qquad \text{Expression 12}$$

Subsequently, the rotation angle calculation unit 20 calculates the absolute rotation angle (mechanical angle) $\theta_A$ of the rotor 1 based on the magnetic pole presently sensed by the first magnetic sensor 21 and the corrected relative rotation angle $\theta_R'$. For example, in a case where the magnetic pole presently sensed by the first magnetic sensor 21 is the first magnetic pole M0, the absolute rotation angle $\theta_A$ of the rotor 1 is equal to the corrected relative rotation angle $\theta_R'$. That is, in this case, the absolute rotation angle $\theta_A$ of the rotor 1 is determined as $\theta_A = \theta_R' / 5$, where 5 is the number of the magnetic pole pairs in this example embodiment.

In a case where the magnetic pole presently sensed by the first magnetic sensor 21 is the second magnetic pole M1, the absolute rotation angle $\theta_A$ of the rotor 1 is determined as $\theta_A = \{\theta_R' + (\text{the angular width of the first magnetic pole M0})\} / 5$. However, it is to be noted that each angular width is a product of the mechanical angle corresponding to the angular width and the number of the magnetic pole pairs (5 in this example embodiment), as described above with reference to Table 1. In a case where the magnetic pole presently sensed by the first magnetic sensor 21 is the third magnetic pole M2, the absolute rotation angle $\theta_A$ of the rotor 1 is determined as $\theta_A = \{\theta_R' + (\text{the sum of the angular widths of the first magnetic pole M0 and second magnetic pole M1})\} / 5$. In a case where the magnetic pole presently sensed by the first magnetic sensor 21 is the fourth magnetic pole M3, the absolute rotation angle $\theta_A$ of the rotor 1 is determined as $\theta_A = \{\theta_R' + (\text{the sum of the angular widths of the first magnetic pole M0, second magnetic pole M1, and third magnetic pole M2})\} / 5$. In a case where the magnetic pole presently sensed by the first magnetic sensor 21 is the fifth magnetic pole M4, the absolute rotation angle $\theta_A$ of the rotor 1 is determined as $\theta_A = \{\theta_R' + (\text{the sum of the angular widths of the first magnetic pole M0, second magnetic pole M1, third magnetic pole M2, and fourth magnetic pole M3})\} / 5$.

In a case where the magnetic pole presently sensed by the first magnetic sensor 21 is the sixth magnetic pole M5, the absolute rotation angle $\theta_A$ of the rotor 1 is determined as $\theta_A = \{\theta_R' + (\text{the sum of the angular widths of the first magnetic pole M0, second magnetic pole M1, third magnetic pole M2, fourth magnetic pole M3, and fifth magnetic pole M4})\} / 5$. In a case where the magnetic pole presently sensed by the first magnetic sensor 21 is the seventh magnetic pole M6, the absolute rotation angle $\theta_A$ of the rotor 1 is determined as $\theta_A = \{\theta_R' + (\text{the sum of the angular widths of the first magnetic pole M0, second magnetic pole M1, third magnetic pole M2, fourth magnetic pole M3, fifth magnetic pole M4, and sixth magnetic pole M5})\} / 5$. In a case where the magnetic pole presently sensed by the first magnetic sensor 21 is the eighth magnetic pole M7, the absolute rotation angle $\theta_A$ of the rotor 1 is determined as $\theta_A$ = {$\theta_R$' + (the sum of the angular widths of the first magnetic pole M0, second magnetic pole M1, third magnetic pole M2, fourth magnetic pole M3, fifth magnetic pole M4, sixth magnetic pole M5, and seventh magnetic pole M6)} / 5. In a case where the magnetic pole presently sensed by the first magnetic sensor 21 is the ninth magnetic pole M8, the absolute rotation angle $\theta_A$ of the rotor 1 is determined as $\theta_A$ = {$\theta_R$' + (the sum of the angular widths of the first magnetic pole M0, second magnetic pole M1, third magnetic pole M2, fourth magnetic pole M3, fifth magnetic pole M4, sixth magnetic pole M5, seventh magnetic pole M6, and eighth magnetic pole M7)} / 5. In a case where the magnetic pole presently sensed by the first magnetic sensor 21 is the tenth magnetic pole M9, the absolute rotation angle $\theta_A$ of the rotor 1 is determined as $\theta_A$ = {$\theta_R$' + (the sum of the angular widths of the first magnetic pole M0, second magnetic pole M1, third magnetic pole M2, fourth magnetic pole M3, fifth magnetic pole M4, sixth magnetic pole M5, seventh magnetic pole M6, eighth magnetic pole M7, and ninth magnetic pole M8)} / 5.

After calculating the absolute rotation angle $\theta_A$ of the rotor 1 in the manner described above, the rotation angle calculation unit 20 calculates the electric angle $\theta_E$ of the rotor of the brushless motor 10 (step S20). Specifically, at this time, if the number (1 to 5) of the magnetic pole pair (one of (M0, M1), (M2, M3), (M4, M5), (M6, M7), and (M8, M9)) presently sensed by the first magnetic sensor 21 is denoted by n, the rotation angle calculation unit 20 calculates the electric angle $\theta_E$ according to Expression 13 shown below, and then provides the calculated electric angle $\theta_E$ to the motor controller 30.

$$\theta_E = 5\theta_A - \{360 \times (n\text{-}1)\} \qquad \text{Expression 13}$$

Subsequently, the rotation angle calculation unit 20 determines whether the motor control is finished (step S21). If the motor control is not yet finished (step S21: NO), the rotation angle calculation unit 20 returns to step S 1. On the other hand, if the motor control is finished (step S21: YES), the rotation angle calculation unit 20 executes a control discontinuing process (step S22).

The flowchart in FIG. 9 illustrates an example of the procedure of the control discontinuing process executed in step S22 in the routine shown in FIG. 5. As shown in FIG. 5, in the control discontinuing process, the rotation angle calculation unit 20 determines whether the brushless motor 10 is rotated sufficiently in the present cycle of the motor control (step S31). Specifically, at this time, the rotation angle calculation unit 20 determines whether the number of rotations of the brushless motor 10 in the present cycle of the motor control is equal to or larger than a predetermined rotation number. If it is determined that the brushless motor 10 is rotated sufficiently (step S31; YES), the rotation angle calculation unit 20 updates the peak value, among those stored in the amplitude correction table (the first table (FIG. 4A) or the second table (FIG. 4B)), which corresponds to the pole number of the magnetic pole for which a peak value has been newly detected, to the newly detected peak value (step S32). Then, the rotation angle calculation unit 20 finishes the control discontinuing process.

According to the foregoing example embodiment of the invention, it is possible to identify the pole numbers of the magnetic poles presently sensed by the respective magnetic sensors 21 and 22, based on a peak value of the output signal V1 of the first magnetic sensor 21 or a peak value of the output signal V2 of the second magnetic sensor 22 when the rotation speed of the rotor 1 is equal to or lower than the predetermined speed after the brushless motor 10 starts running. Also, it is possible to identify the pole numbers of the magnetic poles presently sensed by the respective magnetic sensors 21 and 22, based on a zero-crossing time point of the output signal V1 of the first magnetic sensor 21 or a zero-crossing time point of the output signal V2 of the second magnetic sensor 22 when the rotation speed of the rotor 1 is higher than the predetermined speed after the brushless motor 10 starts running. As such, the magnetic poles presently sensed by the respective magnetic sensors 21 and 22 are accurately identified even when the rotor 1 is rotating at a high speed.

In the meantime, the rotation direction of the rotor 1 may be determined based on the immediately preceding value of the output signal of the magnetic sensor for which a zero-crossing is detected in the present cycle of the routine, the present value of this output signal, and the present value of the other output signal. In the following, this technique will be described in more detail, using the output signal V1 of the first magnetic sensor 21 as "the first output signal V1" and using the output signal V2 of the second magnetic sensor 22 as "the second output signal V2". In a case where the output signal for which a zero-crossing is detected is the first output signal V1, the rotation direction of the rotor 1 is determined as the normal direction (i.e., the direction indicated by the arrow in FIG. 2) if the condition that the immediately preceding value of the first output signal V1 is larger than 0, the present value of the first output signal V1 is equal to or smaller than 0, and the present value of the second output signal V2 is smaller than 0 or the condition that the immediately preceding value of the first output signal V1 is smaller than 0, the present value of the first output signal V1 is equal to or larger than 0, and the present value of the second output signal V2 is equal to or larger than 0 is satisfied. On the other hand, the rotation direction of the rotor 1 is determined as the reverse direction if the condition that the immediately preceding value of the first output signal V1 is equal to or larger than 0, the present value of the first output signal V1 is smaller than 0, and the present value of the second output signal V2 is larger than 0 or the condition that the immediately preceding value of the first output signal V1 is equal to or smaller than 0, the present value of the first output signal V1 is larger than 0, and the present value of the second output signal V2 is smaller than 0 is satisfied.

The disclosure has been explained in conjunction with the specific exemplary embodiment thereof. However, it is evident that many alternatives, modifications, and variations will be apparent to those skilled in the art. Accordingly, the examples of the disclosure as set forth herein are intended to be illustrative, not limiting. There are changes that may be made without departing from the scope of the claims. For example, the invention may be used also for detecting the rotation angles of various rotors other than rotors of brushless motors.

**Claims**

1. A rotation angle detection device that includes: a detection rotor that rotates as a rotor rotates and that has multiple magnetic poles arranged in a circumferential direction of the detection rotor; and multiple magnetic sensors that output respective sinusoidal signals that are different in phase from each other by a given degree as the detection rotor rotates, the rotation angle detection device detecting a rotation angle of the rotor based on the sinusoidal signals output from the magnetic sensors, the rotation angle detection device comprising:

    a storing unit that stores angular widths of the respective magnetic poles;
    a zero-crossing detecting unit that detects a zero-crossing time point for each of the sinusoidal signals;
    a zero-crossing interval calculating unit that calculates, for each of the sinusoidal signals, a time interval between consecutive zero-crossings, based on the zero-crossing time point detected by the zero-crossing detecting unit; and
    a magnetic pole identifying unit that identifies the magnetic poles presently sensed by the respective magnetic sensors, based on the time interval calculated by the zero-crossing interval calculating unit and the angular widths of the respective magnetic poles.

2. The rotation angle detection device according to claim 1, wherein the detection rotor is configured such that the angular width of at least one of the multiple magnetic poles is different from the angular widths of any other magnetic poles.

3. The rotation angle detection device according to claim 1 or 2, further comprising:

    a correcting unit that corrects amplitudes of the respective sinusoidal signals in accordance with the magnetic poles identified by the magnetic pole identifying unit; and
    a rotation angle calculating unit that calculates the rotation angle of the rotor based on the respective sinusoidal signals of which the amplitudes have been corrected by the

4. The rotation angle detection device according to any one of claims 1 to 3, wherein the zero-crossing detecting unit samples the respective sinusoidal signals at given cycles, and detects the zero-crossing time point, for each of the sinusoidal signals, through a linear interpolation between sampled values, one of which is obtained before an inversion of a sign of the sinusoidal signal and the other of which is obtained after the same inversion.

EP 2 466 270 A2

# FIG.1

MOTOR CONTROLLER 30 → MOTOR 10

1 — N S N S — 22, 21

ROTATION ANGLE CALCULATION UNIT 20

# FIG.2

M0, M1, M2, M3, M4, M5, M6, M7, M8, M9

21, 22

a b c d e f g h i j

N S N S N S N S N S

16

FIG.3

# F I G . 4A

| POLE NO. | PEAK VALUE | ANGULAR WIDTH | CORRECTION GAIN G1 |
|---|---|---|---|
| 0 | +490 | 170deg | 500/490 |
| 1 | −485 | 165deg | 500/485 |
| 2 | +480 | 160deg | 500/480 |
| 3 | −490 | 170deg | 500/490 |
| 4 | +485 | 165deg | 500/485 |
| 5 | −510 | 190deg | 500/510 |
| 6 | +520 | 195deg | 500/520 |
| 7 | −520 | 195deg | 500/520 |
| 8 | +525 | 200deg | 500/525 |
| 9 | −510 | 190deg | 500/510 |

# FIG.4B

| POLE NO. | PEAK VALUE | ANGULAR WIDTH | CORRECTION GAIN G2 |
|---|---|---|---|
| 0 | +490 | 170deg | 500/490 |
| 1 | −485 | 165deg | 500/485 |
| 2 | +480 | 160deg | 500/480 |
| 3 | −490 | 170deg | 500/490 |
| 4 | +485 | 165deg | 500/485 |
| 5 | −510 | 190deg | 500/510 |
| 6 | +520 | 195deg | 500/520 |
| 7 | −520 | 195deg | 500/520 |
| 8 | +525 | 200deg | 500/525 |
| 9 | −510 | 190deg | 500/510 |

# F I G . 5A

START

S1

READ VALUES OF
OUTPUT SIGNALS

S2

FIRST CYCLE ?   NO

YES

S3

RELATIVE POLE NUMBER
SETTING PROCESS

S4

NO   ZERO-CROSSING
IS DETECTED ?

YES   S5

CALCULATE AND
STORE ZERO-CROSSING
TIME POINT

S8

NO   PEAK
VALUE IS
DETECTED ?

YES

S6

CALCULATE ZERO-
CROSSING INTERVAL

S9

POLE
NUMBERS IS   YES
IDENTIFIED ?

NO

S7

ZERO-CROSSING
INTERVAL <
A ?   YES

NO

① ② ③ ④ ⑤

# FIG. 5B

FIG.6A

FIG.6B

F I G . 7

# FIG. 8

# F I G . 9

```
      ╭─────────────╮
      │   CONTROL   │
      │ DISCONTINUING │
      │   PROCESS   │
      ╰─────────────╯
            │
  S31       │
     ╲   ╱─────────╲
      ╲ ╱   MOTOR   ╲      NO
       ⟨  IS ROTATED  ⟩────────┐
      ╱ ╲ SUFFICIENTLY? ╱      │
     ╱   ╲─────────╱          │
  S32      │ YES              │
       ┌───┴──────────┐       │
       │  UPDATE PEAK  │       │
       │ VALUE IN AMPLITUDE │  │
       │ CORRECTION TABLE │   │
       └──────┬───────┘       │
              │ ◄─────────────┘
         ╭────┴────╮
         │  RETURN  │
         ╰─────────╯
```

# F I G . 10

101

102

122   121

# F I G . 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002257649 A